(19) Europäisches Patentamt
European Patent Office
Office européen des brevets

(11) EP 4 530 377 A1

(12) EUROPEAN PATENT APPLICATION

(43) Date of publication:
02.04.2025 Bulletin 2025/14

(21) Application number: 23200204.8

(22) Date of filing: 27.09.2023

(51) International Patent Classification (IPC):
C25B 1/04 (2021.01)        H01M 8/0271 (2016.01)
H01M 8/0273 (2016.01)      H01M 8/2475 (2016.01)
H01M 8/248 (2016.01)       C25B 9/63 (2021.01)
C25B 9/70 (2021.01)

(52) Cooperative Patent Classification (CPC):
C25B 1/04; C25B 9/63; C25B 9/70; H01M 8/0271;
H01M 8/0273; H01M 8/2475; H01M 8/248

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Südbayerisches Portland-Zementwerk
Gebr.
Wiesböck & Co. GmbH
83101 Rohrdorf (DE)

(72) Inventors:
• Mairegger, Thomas
  83101 Rohrdorf (DE)
• Lechner, Alexander
  83101 Rohrdorf (DE)
• Stuffer, Thomas
  83101 Rohrdorf (DE)
• Stadler, Philipp
  83101 Rohrdorf (DE)
• Beck, Alexander
  83101 Rohrdorf (DE)

(74) Representative: Lohr, Jöstingmeier & Partner
Junkersstraße 3
82178 Puchheim/München (DE)

(54) ELECTRODE SUPPORT FOR AN ELECTRODE STACK

(57) An electrode support comprising a spacer having a front ring surface 110, a rear ring surface 120, an outer ring surface 130, a first inner ring surface 115, a second inner ring surface 125, a first abutment 141, a second abutment142, a spacer axis 2 and a spacer thickness wherein the front ring surface 110 faces in a first direction and the rear ring surface faces a second direction and wherein the front ring surface 110 and the rear ring surface 120 are connected by the outer ring surface 130 enables to ease assembly of an electrode stack, if the first inner ring surface 115 faces antiradially, delimits the front ring surface 115 antiradially and delimits a first recess 119 antiradially and if the second inner ring surface 125 faces antiradially, delimits the rear ring surface antiradially 125, and delimits a second recess 129 antiradially. Further the first abutment 141 defines the rearward facing end of the first inner ring surface 115 and faces in the first direction and the second abutment 142 defines the forward-facing end of the second inner ring 125 surface and faces in the second direction and the first recess 119 is open in the first direction and the second recess 125 is open in the second direction.

Fig. 3

# Description

## Field of the invention

The invention relates to an electrode support for an electrode stack. The electrode support comprises at least a spacer having a front ring surface, a rear ring surface, an outer ring surface.

## Description of the related art

The most prominent example of Electrolysis involves splitting of water into hydrogen and oxygen gases using an electric current. Alternatively, more sophisticated reactions may take place, depending on the educt (s) being split and the electrodes being used. Examples for electrolytic synthesis in the context of carbon dioxide ($CO_2$) conversion to feedstock materials for the chemical industry have been reviewed *in* Beilstein J. Org. Chem. 2014, 10, 2484-2500 by Matthesen, Fransaer, Binnenmans and De Vos, Electrocarboxylation: towards sustainable and efficient synthesis of valuable carboxylic acids.

Industrial scale electrolytic cells for splitting of water into hydrogen and oxygen gases are available. They comprise electrode stacks that typically consist of alternating anode and cathode layers, often separated by ion-conductive membranes. These layers allow for efficient separation of the hydrogen and oxygen gases produced during electrolysis. The gases are collected separately and can be easily harvested for various applications.

However, these existing electrode stacks cannot be used for more complex electrolytic reactions as suggested in the context of carboxylation of $CO_2$.

## Summary of the invention

The problem to be solved by the invention is to simplify assembly of scalable electrode stack for use in the fields of electrolysis, in particular for electrocarboxylation.

Solutions of the problem are described in the independent claim 1. The dependent claims relate to further improvements of the invention.

The invention provides an electrode support that simplifies assembly and subsequent maintenance of an electrolyser comprising a stack of electrodes. The electrode support may comprise a spacer. The spacer may be configured to support a first electrode and a second electrode as will be explained below. The spacer and hence the electrode support may have at least one of a front ring surface, a rear ring surface, an outer ring surface, a first inner ring surface, a second inner ring surface a first abutment, a second abutment, a spacer axis and a spacer thickness.

The ring surfaces may be delimited by two closed lines, e.g., by circles, but do not need to. For example, the ring surfaces may as well be delimited by polygons or curved lines or lines having straight and curved sections. The spacer axis can be considered herein as an axis on which the ring surfaces are centered. It is not required that all the identified ring surfaces are centered on the spacer axis, but for conceptual simplicity it may be assumed.

Herein, we assume that the front ring surface faces in a first direction and the rear ring surface faces a second direction. Further it is preferred, but not necessary that these two directions are opposite to each other. Further, it is preferred that the first direction and the second direction are parallel to the spacer axis. The first ring surface and the second ring surface may delimit the spacer in the first direction and in the second direction and hence may define the spacer thickness, which is the dimension of the spacer measured parallel to the spacer axis.

The outer ring surface may connect the front ring surface and the rear ring surface. The outer ring surface may be considered to face essentially radially, i.e., it faces away from the spacer axis. Facing away from the spacer axis means as usual that for any ray having a starting point on a surface of a body and pointing in the normal direction of that surface away from the body (e.g., away from the body of the spacer), said starting point defines the distance of the ray to the spacer axis, wherein said distance is the length of the shortest connection line between the spacer axis and the respective ray.

The first inner ring surface may face at least essentially antiradially. As usual, a surface may be considered to face essentially antiradially, if the rays emerging from the surface in the normal direction of the surface have a shorter distance than the distance between the starting point of said ray and the spacer axis. An antiradially facing surface, has to be distinguished from the antiradial direction. The antiradial direction as usual points from any given point straight towards the axis and is perpendicular to said axis (simply the opposite of the radial direction). The first inner ring surface may further delimit the front ring surface, e.g., antiradially. The first inner ring surface may as well delimit a first recess, e.g., antiradially.

The second inner ring surface may as well face at least essentially antiradially and may delimit the rear ring surface, e.g., antiradially. The second inner ring surface may as well delimit a second recess, e.g., antiradially.

The first abutment may define the rearward facing end of the first inner ring surface and preferably faces at least essentially in the first direction. Similarly, the second abutment may define the forward-facing end of the second inner ring surface and preferably faces at least essentially in the second direction.

The first recess may be open in the first direction and the second recess may be open in the second direction. After assembly of the spacer in an electrode stack, the recesses may of course be covered and in this meaning closed, but they may be open in the sense that they are not closed by the spacer itself, even if another part of the electrode stack (e.g., a membrane) closes or covers the first and/or second recess. The spacer can be stacked and thereby provide the first and the second recesses as volumes to receive the electrodes, electrolytes, membranes and the like and may hence improve assembly of an electrode stack. If two electrode supports are stacked, the rear end of the second recess of a first of the two electrode supports may be considered as the front end of the first recess of a second of the two electrode supports, assuming there is no membrane or the like that is in between of the first electrode support and the second electrode support. For example, an optional membrane may be in between the rear ring surface of a first electrode support and the front ring surface side of a second electrode support. In this case, the membrane's front side may delimit the rear side of the second recess of the first electrode support and the rear side of the membrane may delimit the front side of the first recess of the second electrode support.

In a preferred example, a translation of the rear ring surface along the spacer axis towards the front ring surface by a distance that corresponds to the frame thickness maps at least a portion of the rear ring surface onto the front ring surface. In other words, at least a portion of the rear ring surface is preferably congruent to a corresponding portion of the front ring surface. This allows to easily stack multiple spacers, which hence provides for a sequence of first and second recesses.

In a particular preferred example, the spacer has at least two first fluid channels and/or at least two second fluid channels. These first fluid channels may each have a first opening in the first inner ring surface. Hence, the first fluid channels enable to provide a first fluid flow into the first recess and out of the first recess again. Accordingly, it is preferred if the opening of a first of the first fluid channels is at the opposite side of the first inner ring surface (relative to the spacer axis) than the opening of a second of the first fluid channels. This configuration enables a fluid flow across the first recess or in other words from one end of the first recess to an opposite end of the first recess. The positions of the two first openings define the two possible first flow directions, being antiparallel to each other.

Similarly, the second fluid channels may each have a second opening in the second inner ring surface. In other words the optional second fluid channels may each have a second opening extending from the second inner ring surface. Here "second opening" does not imply that there is a first opening, the denominator "second" simply indicates the location of the second opening, which is preferably in the second inner ring surface. Accordingly, the second fluid channels as well enable to provide a second fluid flow into the second recess and out of the second recess again. Again "second" indicates only that the optional second fluid flow passes through the second recess; it does not imply the existence of a first fluid flow.

Like the first openings, the second openings are preferably at opposite sides of the respective recess. Accordingly, it is preferred if the opening of a first of the second fluid channels is at the opposite side of the second inner ring surface than the opening of a second of the second fluid channels. This measure enables the second fluid flow to pass across the second recess or in other words from one end of the second recess to an opposite end of the second recess.

Summarizing, the at least two first fluid channels are preferably in fluid communication with each other via the first recess and/or the at least two second fluid channels are preferably in fluid communication with each other via the second recess. In this sense, the first recess may connect the two first fluid channels and/or the second recess may connect the two second fluid channels.

The positions of the two second openings define the two possible second flow directions, being as well antiparallel to each other. In a preferred example, a parallel projection of the two possible first flow directions parallel to the longitudinal axis intersects the two possible second flow directions at least essentially in a 90° angle. At least essentially perpendicular means that a 90° ($\pi/2$) angle is preferred but that a deviation smaller than an angle $\pm|\alpha|$ can be accepted. Preferred values of $|\alpha|$ are smaller or equal 30°, e.g. $\alpha \in \{30°, 20°, 10°, 5°, 2.5°, 1°, 0°\}$. These first and second flow directions correspond to the directions indicated by a first distance vector from a first first opening to a second first opening and by a second distance vector from a first second opening to a second second opening, i.e. a parallel projection of the first distance vector along the longitudinal axis of the spacer in the plane of the second distance vector intersects the second distance vector preferably at least essentially in a 90° angle. In this sense the first openings and the second openings are at least essentially perpendicular. This simplifies sealing the gaps between adjacent spacers. In other examples the two distance vectors are parallel or antiparallel and in this sense the first openings may be parallel (or antiparallel) to the second openings.

After assembly, the first and the second fluid channels enable to control the flow of two different fluids into the electrolytic cell. As will be explained below in more detail and as already mentioned above, an optional membrane may separate the first and the second recess and hence the fluids.

In a preferred example, at least one of the first fluid channels and/or of the second fluid channels may be in in fluid communication with a first through hole or a second through hole, respectively. This means that at least one of the first fluid channels may be in in fluid communication with a first through hole and/or at least one of the second fluid channels may be in in fluid communication with a second through hole. These through holes extend preferably from the front ring surface of a spacer to the rear ring surface of the spacer. The through holes preferably extend parallel to the longitudinal axis. The through holes enable to stack multiple electrode supports and feed or remove the fluids to the recesses via a central fluid port, being connected (at least indirectly) to the first and/or last electrode support of a stack of electrode supports. Hence, it is particularly preferred if a first of the first fluid channels is in fluid communication with a first of the first through holes and a second of the first fluid channels is in fluid communication with a second of the first through holes. This enables to provide a first fluid to the first recess via the first through hole and to withdraw the first fluid from the first recess via the second first through hole. Further, it is particularly preferred if a first of the second fluid channels is in fluid communication with a first of the second through holes and a second of the second fluid channels is in fluid communication with a second of the second through holes. This enables provide a second fluid to the first recess via the first through hole and to withdraw the first fluid from the first recess via the second first through hole. It is preferred if the first and/or second through holes of an electrode support connect the front ring surface and the rear ring surface of the electrode support, i.e. the through hole may be considered as channels extending between the front ring surface and the rear ring surface via the body of the spacer.

As already stated, it is particularly preferred, if the at least one first through hole or the at least one second through hole extend between the front ring surface and the rear ring surface. Thereby, corresponding through holes may simply be aligned by stacking the multiple electrode support. The corresponding openings are as a result connected in parallel. In a particularly preferred example, a first set of first fluid channels may be connected by a first set of first through holes. Further, a second set of first fluid channels may be connected by a second set of first through holes, wherein each first recess of the stack may be in fluid communication with the first set of first through holes and with the second set of first through holes, via the first openings of the corresponding fluid channels. The first set of first through holes may hence be used to provide a first educt fluid flow into the first recess and the second set of first through holes may be used draw a first product fluid flow from the first recess.

The second fluid channels may be connected in the same way: Accordingly, in a particularly preferred example, a first set of second fluid channels may be connected by a first set of second through holes. Further, a second set of second fluid channels may be connected by a second set of second through holes, wherein each second recess of the stack may be in fluid communication with the first set of second through holes and with the second set of second through holes, via the second openings of the corresponding second fluid channels. The first set of second through holes may hence be used to provide a second educt fluid flow into the second recess and the second set of second through holes may be used draw a second product fluid flow from the second recess.

In a preferred example, the first inner ring surface and/or the first abutment may have an electrically conductive layer being electrically connected with a first terminal and/or the second inner ring surface and/or the second abutment have an electrically conductive layer being electrically connected with a second terminal. If a first electrode is attached to the first inner ring surface and/or the first abutment, it is electrically contacted. The corresponding electrical connection can be used to measure the voltage drop across the corresponding electrical cell and hence to monitor operation of the respective cell. Further, the connections may be used to supply electrical power to the respective first and/or second electrode/s.

Such optional contacting the of the first or the second electrode is particularly easy, if the first terminal extends into a first passage and/or the second terminal extends into a second passage. Further, the first passage and/or the second passage may extend between the front ring surface and the rear ring surface. This is preferred, if a set of first electrodes shall be connected in parallel to a first port of a power source and/or if a set of second electrodes shall be connected in parallel to a second port of the power source. Both measures allow to connect the electrodes of a set by a rod extending through the first and/or second passage respectively.

In another, even more preferred example, the first passage and/or the second passage provide a connection with the outer ring surface, enabling to measure the voltage at a given electrode, even if the electrodes are connected in series. In the latter case, of course a single passage is sufficient as the first and the second electrode of the electrode support preferably have at least essentially the same potential, because they are necessarily connected in series and the voltage drop of the connection between the first and the second electrode of an electrode support should be as small as possible (i.e., negligible), to enhance efficiency. At least the voltage drop can be determined based on a measurement the current, assuming the resistance to be known (by design or by an initial measurement).

As already apparent, it is preferred if a first electrode is located in the first recess and abuts the first abutment and/or a second electrode is located in the second recess and abuts the second abutment. The first and the second electrode may be electrically connected with each other, thereby allowing to operate the cells of a stack in series. In a particular preferred example, the first and the second electrodes form a single piece. It may be, e.g., a sheet metal separating the first recess and the second recess. In this case the front surface of the sheet metal is considered as to provide the first electrode and the rear surface of the sheet metal is considered to provide the second electrode. The abutments controlling the axial position of the sheet material may have to be reversed (i.e., their respective directions they are facing may have to be inverted).

Preferably, the first electrode is spaced at a distance from the second electrode, wherein the distance is defined by the first abutment and the second abutment. Further, the front side of the first electrode and the rear side of the second electrode are preferably not in fluid communication with each other. In other words, the first recess and the second recess are separated from each other (assuming the first recess to be axially delimited by the front surface of the first electrode and the second recess to be delimited by the rear surface of the second electrode), at least after insertion of the first electrode and/or the second electrode. Such fluidic separation may be obtained by a fluid tight wall separating the recesses (even if no electrode has been mounted) and/or sealingly attaching the electrodes to the respective abutments and/or the respective inner ring surfaces.

It is preferred, if the first electrode is thinner than the axial extension of the first inner ring surface. This provides space for a first fluid flow across the first recess and, e.g., at least essentially parallel to front surface of the first electrode. Similarly, the second electrode is preferably thinner than the axial extension of the second inner ring surface, thereby providing a space for a second fluid flow across the second recess and, e.g., at least essentially parallel to rear surface of the second electrode.

In a preferred example, at least two, preferably a higher number of electrode supports may be combined into an electrode stack. To this end the electrode supports may be attached to each other one after preferably aligning the respective spacer axes. Below, we will explain an example comprising a stack of only two electrode supports, but as the front and the rear surfaces are preferably at least in part congruent to each other as explained above and/or configured to mate each other, further electrode supports can be added in the same way: A first electrode support of the at least two electrode supports and a second electrode support of the at least two electrode supports jointly enclose a cell volume. The rear ring surface of the first electrode support and the front ring surface of the second electrode support are biased towards each other and in this meaning attached at least indirectly to each other. This may be obtained by simply bolting the two electrode supports together. In other words, biasing means in this context to press the rear ring surface of the first electrode support against the front ring surface of the second electrode support (and/or vice versa). In a preferred example a gasket may be positioned between the rear ring surface of the first electrode support and the front ring surface of the second electrode support.

The resulting cell volume obtained by attaching the two electrode supports as explained above may be delimited by the second electrode of the first electrode support and the first electrode of the second electrode support, the second inner ring surface of the first electrode support and the first inner ring surface of the second electrode support.

Preferably, the cell volume is separated by a membrane into a first subvolume and a second subvolume. The optional membrane may extend between the second inner ring surface of the first electrode support and the first inner ring surface of the second electrode support. The portion of the membrane that extends between the front ring surface of the second electrode support and the rear ring surface of the first electrode support may serve as a gasket. The membrane may, e.g., be clamped between the rear ring surface of the first electrode support and the front ring surface of the second electron support. Accordingly, the first subvolume may extend between the second electrode of the first electrode support and the membrane and the second subvolume may extend between the membrane and the first electrode of the second electrode support. This is simple to mount and provides an efficient fluid separation between the first subvolume and the second subvolume.

A first fluid permeable shim may be located in the first subvolume and may separate the second electrode of the first electrode support and the membrane. A second fluid permeable shim may be located in the second subvolume and separate the first electrode of the second electrode support from the membrane. In other words, a first shim may be placed in between of the second electrode of the first electrode support and the membrane and/or a second shim may be placed in between of the membrane and the first electrode of the second electrode support.

In an example, the first shim and/or the second shim may comprise a first and/or second electrically conducting layer located in between of the membrane and the respective electrode. This may increase the effective surface of the corresponding electrode and thereby increase the current for a given voltage drop across the second electrode of the first electrode support and the first electrode of the second electrode support. In a preferred example, a first and/or second fluid permeable electrically isolating layer of the respective shim may be located between the membrane and the first and/or second electrically conducting layer, respectively.

Preferably, the rear end of a first through hole of the first electrode support is aligned with a front end of a first through hole of the second electrode support. This measure connects the corresponding first openings in parallel, and hence allows to couple these to a single fluid port. Similarly, rear end of second through hole of the first electrode is preferably aligned with a front end of a second through hole of the second electrode support. A set of aligned first through holes hence provide a first conduit and a set of aligned second through holes provides a second conduit. The conduits may have a fluid port at both or at least one end. One end of the first and/or second conduit may be closed by a plug.

**Description of Drawings**

In the following the invention will be described by way of example, without limitation of the general inventive concept, on examples of embodiment with reference to the drawings.

Figure 1 shows a perspective view of an electrode support.

Figure 2 shows a front view of the electrode support.

Figure 3 shows a sectional view of the electrode support along section plane A-A, (see FIG. 2)

Figure 4 shows an electrode stack comprising electrode supports.

Figure 5 shows a detail of the electrode stack in a sectional view, the section plane corresponds to the plane B-B as indicated in FIG. 2.

Figure 6 shows a perspective view of another electrode support.

Figure 7 shows a front view of the electrode support of FIG. 6.

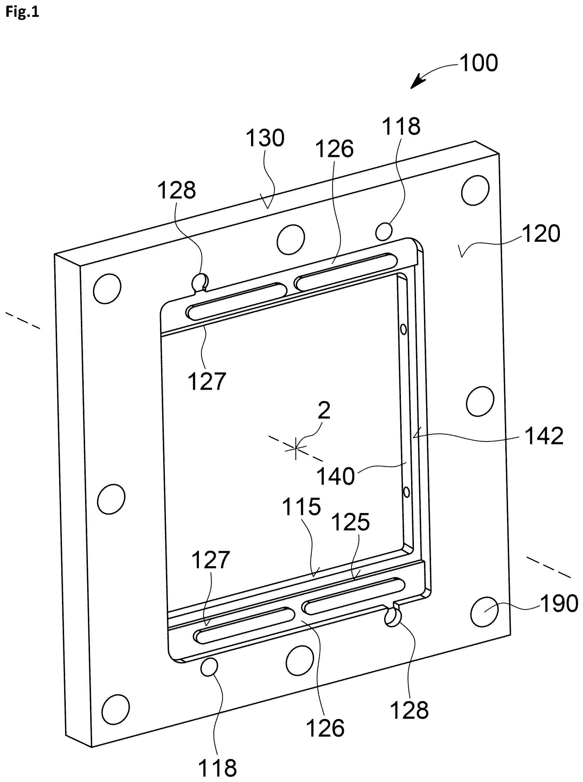

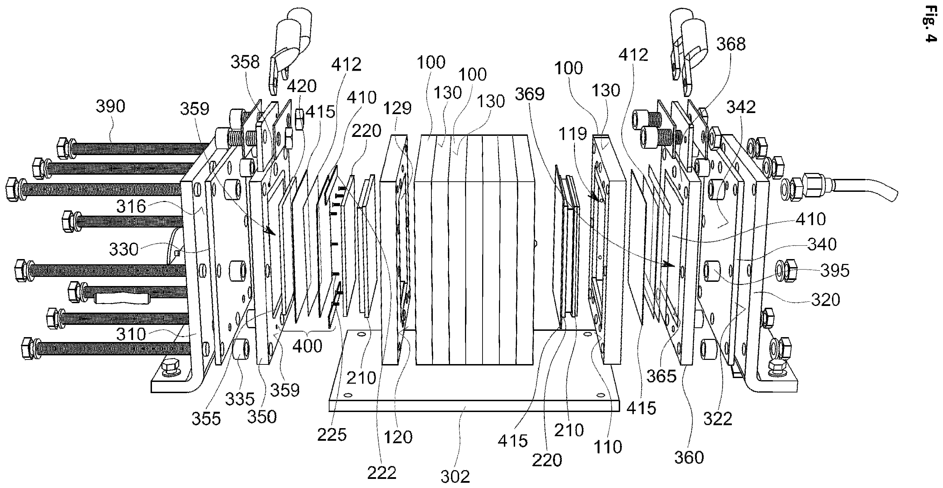

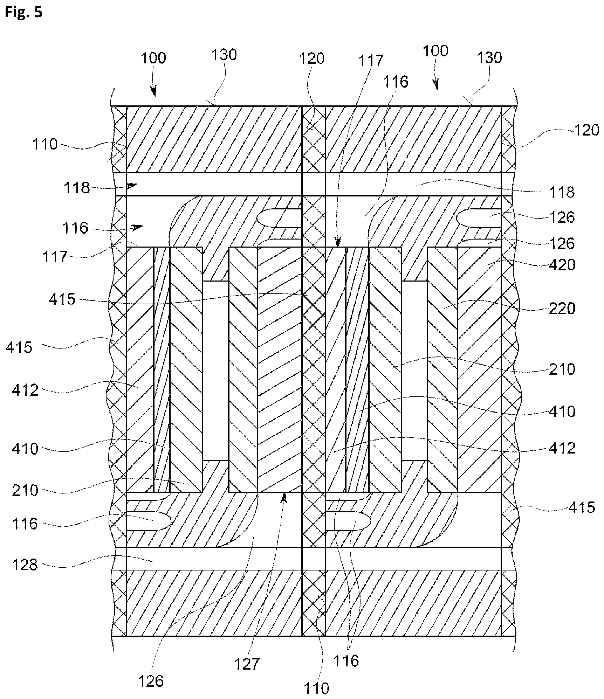

The electrode support 100 in FIG. 1 to FIG. 3 can be considered as a spacer 100 being configured to receive a first electrode 210 and a second electrode 220 as will be explained with reference to FIG. 4 and FIG. 5. The terms electrode support and spacer can be used interchangeably. The drawings in FIG. 1 to 3 are not scale, to ease identifying some features in the sectional view.

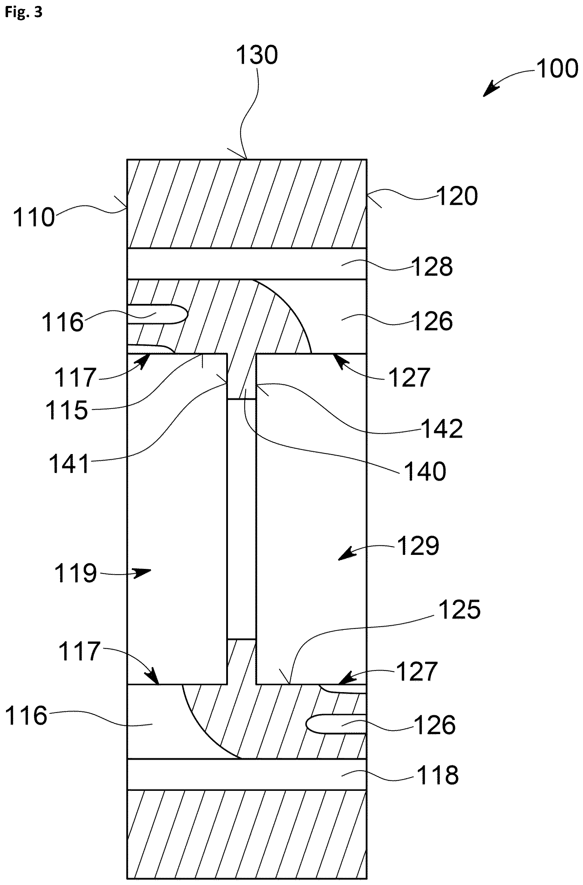

The spacer 100 may form a ring with a first ring surface 110 (see FIG. 3), which is referred to as front ring surface 110 and rear ring surface 120 being referred to as second ring surface 120 (FIG. 1 to FIG. 3). The front ring surface 110 and the rear ring surface 120 are preferably centered on a spacer axis 2. As can be seen, the outer contours of the front ring surface 110 and of the second ring surface 120 can be defined by a polygon. It is emphasized that other shapes can be used as well. Here, a polygon has been used to visualize that the ring surfaces are not necessarily delimited by circles, but of course they could be.

The radially outer edge of the front ring surface 110 is preferably connected to the radially outer edge of the rear ring surface 120 by an outer ring surface 130. A first inner ring surface 115 may be connected with the front ring surface 110 and/or a second inner ring surface 125 may be connected with the rear ring surface 120. In other words, the first inner ring surface 115 may face at least essentially antiradially and may delimit the front ring surface 110 antiradially. The first inner ring surface 115 thus encloses a first recess 119 radially (see FIG. 3).

Similarly, the second inner ring surface 125 may face at least essentially antiradially and may delimit the rear ring surface 120 antiradially. The second inner ring surface 125 thus encloses a second recess 129 at least essentially radially. At least one land 140 may extend in between of the first inner ring surface 115 and the second inner ring surface 125. The land 140 may have a front facing side and a rearward facing side which provides a first abutment 141 and/or a second abutment 142 for a supporting the first electrode 210 and/or for a second electrode 220, respectively (see FIG. 4 and 5).

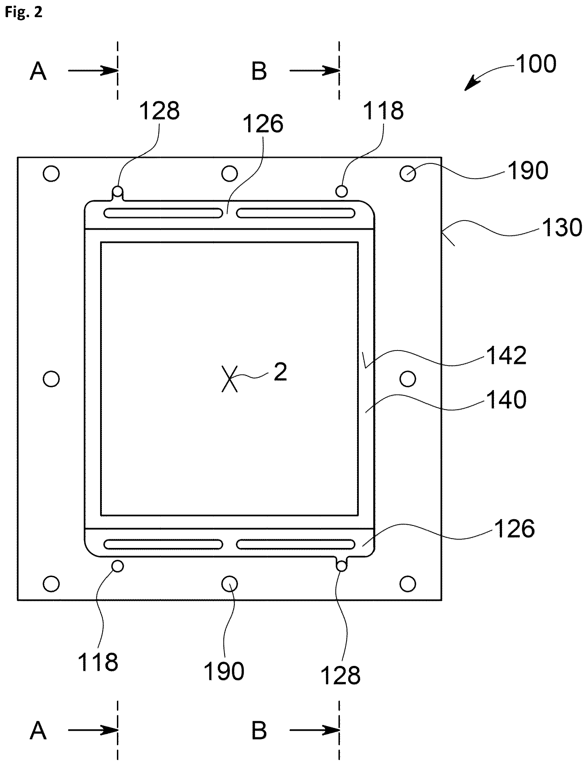

The spacer 100 may further comprise first fluid channels 116 and second fluid channels 126. The first fluid channels 116 may have at least one first opening 117 in the first inner ring surface 115 and the second fluid channels 126 may have at least one second opening 127 in the second inner ring surface 125. As can be seen best in FIG. 1 and FIG. 2, the optional first and/or the second openings 117,127 may preferably provide a fluid communication of the first fluid channels 116 and the second fluid channels 126, with the respective one of the first and the second recesses 119, 129.

The first and/or the second fluid channels 116, 126 may be in fluid communication with corresponding through holes 118, 128. These through holes enable to provide a fluid flow from (or to) the front and rear of a stack of electrode supports 100 via the fluid channels 116, 126 in (from) the respective first or second recesses 119, 129.

As can be seen in FIG. 1 and 2, the spacer may further comprise mounting holes 190. These optional mounting holes 190 are through holes that simplify aligning multiple spacers 100 when stacking them as shown in FIG. 4 and 5.

Further these enable to clamp spacers 100 of a stack together by simply inserting a pull rod via the mounting holes.

FIG. 4 shows an example electrode stack 300 in a partially exploded view (partially mounted view). The example electrode stack 300 may comprise a number of stacked electrode supports 100 as shown in FIG. 1 to FIG. 3. The electrode stack 300 may be mounted to a support plate 302. In general, the electrode stack may comprise a front-end plate 310 and a rear-end plate 320. These may but do not need to be mounted to the support plate 302. The front-end plate 310 has rearward facing surface 306 facing at least essentially parallel to the axis 2 in the direction of a front facing surface 322 of the rear-end plate 320. In the present example, it is assumed that the front-end plate 310 and/or the rear-end plate 320 are conductive (e.g., made of metal). At least in this particular in this case it is preferred that the front-end plate's rear surface 316 and the rear-end plate's front surface 322 are covered by a front isolating plate 330 and a rear isolating plate 340, respectively. The isolation may in addition or alternatively be provided by at least one isolating spacer. On the rear surface 336 of the front isolating plate 330 may be a front electrode 350 and on the front surface 342 of the rear isolating plate 330 may be rear electrode 360.

The front and the rear electrodes 350, 360 may have connecting terminals for connecting the electrode stack 300 with a power supply as indicated by optional cable shoes.

The front electrode 350 has a recess 359 on its rear side ("rear recess 359") that is essentially identical to the second recess 129 of the electrode support 100 shown in FIG. 1 to FIG. 3, i.e., it may be delimited by rear inner ring surface 355 and be connected via at least two second fluid channels with through holes 358. The description of the second recess 129 of the spacer 100 FIG. 1 to FIG. 3 can be read on the rear recess 359 of the front electrode 350 as well. Similarly, the rear electrode 360 may have a front recess 369 and the description of the first recess 119 of the spacer 100 in FIG. 1 to FIG. 3 can be read on this recess as well.

Summarizing, the front recess 369 may be delimited by a front inner ring surface 365 and be connected via at least two first fluid channels with through holes 368.

In the front recess may be a (second) fluid transmissive sheet material 420, like e.g., a mesh, a felt or the like. The fluid transmissive sheet material 420 can be considered as a (second) shim separating the membrane 415 and the second electrode 220 while keeping the second recess 129 open for a fluid flow from a first of the two second fluid channels 126 through the second recess 129 to a second of the two second fluid channels 126. This fluid transmissive sheet 420 is preferably conducting, i.e., it "increases" the surface of the front electrode 350 when attached to it in the rear recess 359. An ion-exchange membrane 415 may cover the rear recess 359 and the first recess 119 of a spacer 100 being positioned next to the front electrode 350. In the first recess 119 of the spacer 100 is preferably a porous layer 412 and preferably a first fluid transmissive sheet material 410, which like the second fluid transmissive sheet material 420 is preferably conducting. At the rear end of the first recess 119 may be the first electrode 210 (see FIG. 5). The fluid transmissive sheet material 410 porous layer 412 can as well be considered as a (first) shim separating the membrane 415 and the first electrode 210 while keeping the first recess 119 open for a fluid flow from a first of the two first fluid channels 116 through the first recess 119 to a second of the two first fluid channels 116.

The first electrode 220 may be attached to the first abutment 141, e.g., as shown by being bolted to the second electrode which is located in the second recess 129 of the spacer 100 (see attachment means 225 in FIG. 4), thereby clamping the first electrode 210 against the first abutment 141 and the second electrode against the second abutment 142 of the spacer 100.

In FIG. 4 screws 225 symbolize attachment means 225 for attaching the electrodes 220, 220 two their respective abutments. An isolating stripe 222 preferably protects the attachment means against the electrolyte. Alternatively, one may use attachment means 225 of the same material as the electrodes 210, 220 and or non-conducting attachment means.

A gasket may be provided between at least one of the abutments 141, 142 and the respective electrode 210, 220 and/or between the two electrodes. Instead, or in addition, the land 140 may close the space between the electrodes 210, 220. In any case it is preferred if the first recess 119 and the second recess 129 of the spacer are not in fluid communication once at least one of the electrodes is mounted. In a preferred example, however, the first electrode 210 and the second electrode 220 are supported by single spacer and are electrically connected. The sequence of layers: (second) fluid transmissive sheet material 420, membrane 415, porous layer 412, first fluid transmissive sheet material 410 is preferably in between of any pair second electrode 220 of a first spacer 1000 and a first electrode 210 of a second spacer 100 being attached the rear ring surface 120 of the first spacer 100 (cf. FIG. 5). Further, this sequence of layers may as well be in between of the spacer 100 being attached to the front or/and rear electrodes 350, 360.

As apparent, the front electrode 350 and the rear electrode 360 and the spacers 100 with the first and second electrodes 210, 220 and the sequences 400 of layers being located in a pair of opposed recesses (359, 119), (129, 119) and/or (129, 369) form a set of electrolytic cells that are connected in series (the first and the second electrodes 210, 220 of each spacer is electrically connected). The set of the front electrode 350, the spacers 100 and the rear electrode 360 may be clamped together, e.g., using bolts 390. When using metal bolts, the electrical isolation between the front electrode 350 and the rear electrode may be maintained by using isolating rings 395 which may be located in the mounting holes of the front and the rear electrodes 350, 260 and the optional isolating plates 330, 340.

As can be seen best in FIG. 5, the membrane 415 separates the respective recesses 119, 129. Further each of the recesses 119, 129 may be provided with an educt electrolyte via a first of the first or second openings 117, 127 and the used electrolyte (the product(s)) may be removed via a second of the first or second openings 117, 127. Thereby, an electrolyte flow through the respective recess at least essentially parallel to the recess facing surfaces of the first or second electrodes can be formed. Fresh electrolyte may be provided via a first of the first through holes 118 to a first of the first fluid channels 116 and from there via at least one of a first opening 117 into the first recess 119. Used electrolyte may be withdrawn via at least one of a second of the first openings 117, a second of the first fluid channels 116 and a second of the first through holes 118. Similarly, a second electrolyte may be provided independently to the second recess 129 via a second of the second through holes 128 to a second of the second fluid channels 126 and from there via at least one of a second opening 127 into the second recess 129. Used second electrolyte may be withdrawn via at least one of a second of the second openings 127, a second of the second fluid channels 126 and a second of the second through holes 128.

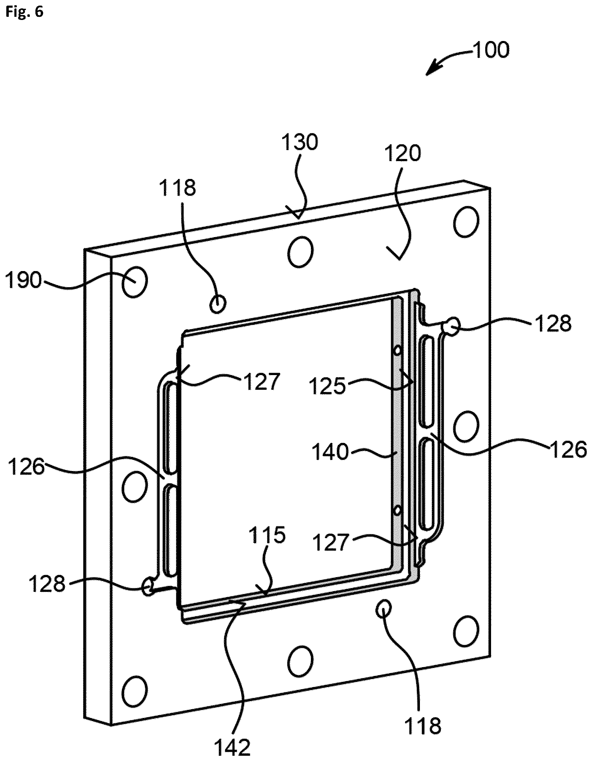

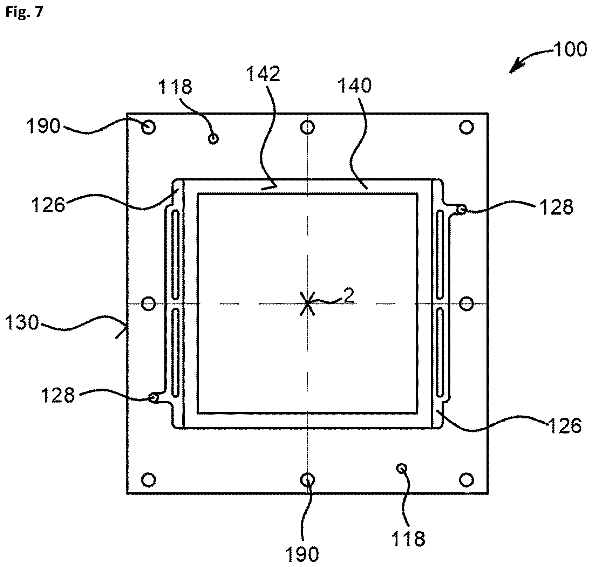

FIG. 6 and FIG. 7 show another spacer 100. The spacer 100 in FIGs. 6 and FIG. 7 is almost identical to the spacer 100 as shown in FIG. 1 to FIG. 5. The description of FIG. 1 to 5 can be read on the spacer as shown in FIG. 6 and FIG. 7 as well and only the difference will be explained: Like the spacer 100 in FIG. 1 to FIG. 5, the spacer 100 as shown in FIG. 6 and FIG. 7 may further comprise first fluid channels and second fluid channels 126. The first fluid channels may have at least one first opening in the first inner ring surface 115 and the second fluid channels 126 may have at least one second opening 127 in the second inner ring surface 125. As can be seen in FIG. 6 and FIG. 7, the optional first and/or the second openings 127 may preferably provide a fluid communication of the first fluid channels and the second fluid channels 126, with the respective one of the first and the second recesses 119, 129 (cf. FIG. 3 and FIG. 5).

The first and/or the second fluid channels126 may be in fluid communication with corresponding first and second through holes 128. These first and second through holes 128 enable to provide a fluid flow from (or to) the front and/rear of a stack of electrode supports 100 via the fluid channels, 126 in (from) the respective first or second recesses 119, 129 (cf. FIG. 3 and FIG. 5). Whereas the first and second fluid channels are aligned in the example of FIG. 1 to 5, a fluid flow from the from a (first) first fluid channel 116 to the opposite first fluid channel 116 is parallel (or antiparallel) to a fluid flow from the from a second fluid channel 126 to the opposite second fluid channel 126. The spacer 100 in FIG. 6 and FIG. 7 as well has two sets of fluid channels126, however these are not aligned but rotated relative to the axis 2. In the presented preferred example, it is a rotation by $\frac{\pi}{2}$ (90°) but other angles of rotation are as well possible. Accordingly, the corresponding pairs of through holes 118, 128 are preferably as well rotated, preferably by the same angle. An advantage of the rotated arrangement is that the pressure being applied to the surface of the frame is more evenly distributed. This renders it simpler to seal the gap between two neighbored spacers (see FIG. 5), i.e. the gap between a front ring surface 110 of a first spacer 100 and a rear ring surface 120 of an adjacent spacer 100. In FIG. 6 a vertical line extending through the axis 2 symbolizes a connecting line through the axis 2 of a line from a first of the first openings to a second of the first opening. Correspondingly the horizontal line that extends as well through the axis 2 and connects a first second opening and a second second opening. In this sense, the first openings and the second openings are at least essentially perpendicular.

As already apparent, the terms front and rear have been uses as synonyms for a first direction and a second direction being opposite to the first direction, to simplify reading. The denominator first is often associated to pieces, details, etc. that are on the first side of an item, for example it is assumes that first recess 119 of the spacer 100 is on the front side of the spacer 100. The denominator "second" is often associated to pieces, details, etc. that are on the second side of an item, for example it is assumes that the second recess 129 of the spacer 100 is on the rear side of the spacer 100. If there are first first pieces and second first pieces the additional denominator serves only to distinguish the two first pieces, which are somehow associated to the first side, i.e., the front side. Similarly to items, pieces or details somehow associated to the second side are enumerated "first second item" and "second second item".

Herein conducting, non-conducting and isolating reference to the electrical properties of a solid and not to its thermal conductivity.

**List of reference numerals**

| | |
|---|---|
| 2 | spacer axis |
| 100 | electrode support / spacer |
| 110 | front ring surface / first ring surface |
| 115 | first inner ring surface |
| 116 | first fluid channel |
| 117 | first openings |
| 119 | first recess |
| | |
| 120 | rear ring surface / second ring surface |
| 125 | second inner ring surface |
| 126 | second fluid channel |
| 127 | second openings |
| 129 | second recess |
| | |
| 130 | outer ring surfaces |
| | |
| 140 | lands |
| 141 | first abutment |
| 142 | second abutment |
| | |
| 190 | mounting holes |
| | |
| 210 | first electrode |
| 220 | second electrode |
| 222 | isolating stripe |
| 225 | attachment means (e.g. screws) |
| | |
| 300 | electrode stack |
| 302 | support plate |
| 310 | front-end plate |
| 316 | rear surface of front-end plate |
| 320 | rear-end plate |
| 322 | front surface of rear-end plate. |
| 330 | front isolating plate |
| 336 | rear surface of front isolating plate |
| 340 | rear isolating plate |
| 342 | front surface of rear isolating plate |
| 350 | front electrode |
| 351 | connecting terminals |

355    rear inner ring surface of front electrode
358    through hole of front electrode
359    rear recess of front electrode
360    rear electrode
362    connecting terminals
365    front inner ring surface of rear electrode
358    through hole of rear electrode
359    front recess of rear electrode

390    bolts
395    isolating rings

410    fluid transmissive sheet material, preferably conductive
412    porous layer
415    membrane in between of neighbored spacers 100 or a spacer and the front electrode 350 or the rear electrode 360
420    fluid transmissive sheet material, preferably conductive

**Claims**

1. An electrode support (100) for an electrode stack, the electrode support (100) comprising at least a spacer (100) having a front ring surface (110), a rear ring surface (120), an outer ring surface (130), a first inner ring surface (115), a second inner ring surface (125), a first abutment (141), a second abutment (142), a spacer axis (2) and a spacer thickness, wherein:

   - the front ring surface (110) faces in a first direction and the rear ring surface (120) faces a second direction,
   - the second direction is opposite to the first direction,
   - the front ring surface (110) and the rear ring surface (120) are centered on the spacer axis (2) and define the spacer thickness,
   - the front ring surface (110) and the rear ring surface (120) are connected by the outer ring surface (130),
   - the first inner ring surface (115) faces antiradially, delimits the front ring surface (110) antiradially and delimits a first recess antiradially (119),
   - the second inner ring surface (125) faces antiradially, delimits the rear ring surface (120) antiradially, and delimits a second recess antiradially 129,
   - the first abutment (141) defines a rearward facing end of the first inner ring surface (141) and faces in the first direction,
   - the second abutment (124) defines a forward-facing end of the second inner ring surface (142) and faces in the second direction, and
   - the first recess (119) is open in the first direction and the second recess (129) is open in the second direction.

2. The electrode support (100) of claim 1, **characterized in that** a translation of the rear ring surface (120) along the spacer axis (2) towards the front ring surface (110) by a distance that corresponds to the spacer thickness maps at least a portion of the rear ring surface (120) onto the front ring surface (110).

3. The electrode support (100) of claim 1 or 2, **characterized in that** the spacer (100) has at least two first fluid channels (116) and/or at least two second fluid channels (126), wherein first fluid channels (116) each have a first opening (117) in the first inner ring surface (115) and/or the second fluid channels (126) each have a second opening (127) in the second inner ring surface (125).

4. The electrode support (100) of claim 3, **characterized in that** at least one of the first fluid channels (116) and/or of the second fluid channels (126) in in fluid communication with a first through hole (118) or a second through hole (128), respectively, wherein the first through hole (118) and/or the second through hole(s) (128) extend/s between the front ring surface (110) and the rear ring surface (120).

5. The electrode support (100) of one of claims 1 to 4, **characterized in that**:

   - the first inner ring surface (115) and/or the first abutment (141) have an electrically conductive layer being electrically connected with a first terminal, and/or
   - the second inner ring surface (125) and/or the second abutment (142) have an electrically conductive layer being electrically connected with a second terminal.

6. The electrode support (100) of claim 5, **characterized in that** the first terminal extends into a first passage and the second terminal extends into a second passage, wherein:

   - first passage and/or the second passage extend/s between the front ring surface and the rear ring surface, and/or
   - the first passage and/or the second passage provide a connection with the outer ring surface (130).

7. The electrode support (100) of one of claims 1 to 6, **characterized in that** a first electrode (210) is located in the first recess (115) and abuts the first abutment (141) and/or a second electrode (220) is located in the second recess (129) and abuts the second abutment (142).

8. The electrode support (100) of claim 7, **characterized in that** the first electrode (210) is spaced at a distance from the second electrode (220), wherein the distance is defined by the first abutment (141) and the second abutment (142) and/or **in that** a front side of the first electrode (210) and a rear side of the second electrode 220 are not in fluid communication with each other.

9. The electrode support (100) of claim 7 or 8, **characterized in that** the first electrode (210) is thinner than the axial extension of the first inner ring surface (115) and/or the second electrode (220) is thinner than the axial extension of the second inner ring surface (125).

10. At least two electrode supports (100) of one of claims 7 to 9, **characterized in that** a first electrode support (100) of the two electrode supports (100) and a second electrode support (100) of the two electrode supports (100) jointly enclose a cell volume, and **in that**:

   (i) the rear ring surface (120) of the first electrode support (100) and the front ring surface (110) of the second electrode support (100) are biased towards each other, and/or
   (ii) the cell volume is delimited by the second electrode (220) of the first electrode support (100) and the first electrode (210) of the second electrode support (100), the second inner ring surface (125) of the first electrode support (100) and the first inner ring surface (115) of the second electrode support (100), and/or
   (iii) the cell volume is separated by a membrane (415) into a first subvolume and a second subvolume, wherein the membrane extends between the second inner ring surface (125) of the first electrode support (100) and the first inner ring surface (115) of the second electrode support (100), and wherein the second subvolume extends between the first electrode (210) of the second electrode support (100) and the membrane (415) and the first subvolume extends between the second electrode (220) of the first electrode support (100) and the membrane (415).

11. The at least two electrode supports (100) of claim 10, at least option (iii), **characterized in that** a first fluid permeable shim (410) separates the second electrode of the first electrode support (100) and the membrane (415) and/or a second fluid permeable shim (420) separates the first electrode of the second electrode support (100) from the membrane.

12. The at least two electrode supports (100) of claim 11, **characterized in that** at least one of the first shim (410) and the second shim (420) comprises an electrically conducting layer located in between of the membrane (415) and the respective electrode (210, 220).

13. The at least two electrode supports (100) of one of claims 10 to 12, wherein the first electrode support (100) and the second electrode support (100) are both electrode supports (100) of at least claim 4 and in that a rear end of first through hole (118) of the first electrode support (100) is aligned with a front end of a first through hole (118) of the second electrode support (100) and/or a rear end of second through hole (128) of the first electrode support (100) is aligned with a front end of a second through hole (128) of the second electrode support (100).

Fig.1

**Fig. 2**

**Fig. 3**

**Fig. 4**

**Fig. 5**

**Fig. 6**

**Fig. 7**

**EP 4 530 377 A1**

Europäisches Patentamt

European Patent Office

Office européen des brevets

# EUROPEAN SEARCH REPORT

Application Number

EP 23 20 0204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/416262 A1 (OTSU HIDEO [JP] ET AL) 29 December 2022 (2022-12-29) | 1,7-10 | INV. C25B1/04 |
| A | * paragraph [0034] - paragraph [0044]; claims 1-10; figures 1-4 * | 2-6, 11-13 | H01M8/0271 H01M8/0273 H01M8/2475 |
| | ----- | | H01M8/248 |
| A | US 2014/287338 A1 (TANAKA YUKIHITO [JP] ET AL) 25 September 2014 (2014-09-25) * paragraph [0031] - paragraph [0042]; claims 1-4; figures 1-4 * | 1-13 | C25B9/63 C25B9/70 |
| | ----- | | |
| A | US 8 182 940 B2 (RIDLEY PETER JOHN [GB]; RENEWABLE ENERY DYNAMICS TECHNOLOGY LTD [IE]) 22 May 2012 (2012-05-22) * column 3 - column 5; claims 1-19; figures 1-8 * | 1-13 | |
| | ----- | | |

TECHNICAL FIELDS SEARCHED (IPC)

C25B
H01M

The present search report has been drawn up for all claims

| Place of search | Date of completion of the search | Examiner |
|---|---|---|
| Munich | 21 May 2024 | Teppo, Kirsi-Marja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 530 377 A1**

## ANNEX TO THE EUROPEAN SEARCH REPORT
## ON EUROPEAN PATENT APPLICATION NO.

EP 23 20 0204

21-05-2024

| Patent document cited in search report | Publication date | Patent family member(s) | Publication date |
|---|---|---|---|
| US 2022416262 A1 | 29-12-2022 | AU 2019468159 A1 | 19-05-2022 |
| | | BR 112022005286 A2 | 14-06-2022 |
| | | CA 3152212 A1 | 01-04-2021 |
| | | CN 114502776 A | 13-05-2022 |
| | | EP 4036277 A1 | 03-08-2022 |
| | | JP 6783418 B1 | 11-11-2020 |
| | | JP WO2021059379 A1 | 07-10-2021 |
| | | MY 193749 A | 27-10-2022 |
| | | TW 202113159 A | 01-04-2021 |
| | | US 2022416262 A1 | 29-12-2022 |
| | | WO 2021059379 A1 | 01-04-2021 |
| US 2014287338 A1 | 25-09-2014 | CN 104064785 A | 24-09-2014 |
| | | DE 102014205003 A1 | 25-09-2014 |
| | | JP 6037905 B2 | 07-12-2016 |
| | | JP 2014182967 A | 29-09-2014 |
| | | US 2014287338 A1 | 25-09-2014 |
| US 8182940 B2 | 22-05-2012 | AT E463055 T1 | 15-04-2010 |
| | | AU 2006238731 A1 | 26-10-2006 |
| | | CA 2604784 A1 | 26-10-2006 |
| | | CN 101160679 A | 09-04-2008 |
| | | DK 1886368 T3 | 19-07-2010 |
| | | EP 1886368 A1 | 13-02-2008 |
| | | ES 2343817 T3 | 10-08-2010 |
| | | GB 2438575 A | 28-11-2007 |
| | | JP 2008537290 A | 11-09-2008 |
| | | US 2010086829 A1 | 08-04-2010 |
| | | WO 2006111704 A1 | 26-10-2006 |
| | | ZA 200708771 B | 24-11-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEILSTEIN** ; **MATTHESEN** ; **FRANSAER** ; **BINNENMANS AND DE VOS**. Electrocarboxylation: towards sustainable and efficient synthesis of valuable carboxylic acids. *J. Org. Chem.*, 2014, vol. 10, 2484-2500